# EUROPEAN PATENT APPLICATION

(11) **EP 4 722 062 A1**
(43) Date of publication of application: **08.04.2026**
(21) Application number: 24869912.6
(22) Date of filing: 27.06.2024
(51) Int. Cl.: B60W 20/13, B60W 20/11

(54) **CONTROL METHOD AND APPARATUS FOR HYBRID VEHICLE, HYBRID VEHICLE AND MEDIUM**

(30) Priority: 27.09.2023 CN 202311269517
(71) Applicant: Great Wall Motor Company Limited, Baoding, Hebei 071000 (CN)
(72) Inventor: LIU, Hui, Baoding, Hebei 071000 (CN)
(74) Representative: Michalski Hüttermann & Partner Patentanwälte mbB
(86) International application number: PCT/CN2024/102050
(87) International publication number: WO 2025/066353

(57) **Abstract**

Disclosed are a control method and apparatus for hybrid electric vehicle, a hybrid electric vehicle, and a storage medium. The method is applied to a vehicle and includes: acquiring vehicle data and environmental data of the hybrid electric vehicle under a current operating condition; determining, based on the vehicle data and the environmental data, optimal target state of charge corresponding to the current operating condition; and controlling discharging or charging of a power battery of the hybrid electric vehicle according to the optimal target state of charge.

## Description

### CROSS-REFERENCE TO RELATED APPLICATIONS

The present disclosure claims priority to Chinese patent application No. 202311269517.6 filed on Wednesday, September 27, 2023. All of the aforementioned patent applications are hereby incorporated by reference in their entireties.

### TECHNICAL FIELD

The present disclosure generally relates to the field of vehicle technologies, and in particular, to a control method and apparatus for a hybrid electric vehicle, a hybrid electric vehicle, and a medium in the field of vehicle technologies.

### BACKGROUND

Traditional energy sources such as oil and natural gas are non-renewable resources, which do not align with the concept of sustainable development. In automotive industry, countries worldwide are placing increasing emphasis on a development of a new energy vehicle industry. Hybrid electric vehicles enable the use of both fuel and electricity by incorporating a hybrid power system into a conventional powertrain, thereby reducing fuel consumption and improving drivability. The hybrid electric vehicles are one of mainstream development directions in the current automotive industry. By incorporating the hybrid power system, traditional fuel power and electric power are combined to enhance vehicle performance. An engine may be refueled with petroleum-based fuel, while a vehicle battery may be charge, both working together to provide power for the vehicle, improving overall comfort and enhancing driving experience of users.

The hybrid electric vehicles retain the engine for power delivery while adding electric motor assistance, enabling pure electric drive, pure fuel drive, and dual-power hybrid drive. Meanwhile, the driving mode may also be switched appropriately based on external conditions. Due to the incorporation of a battery system, the control of battery charging and discharging is a crucial aspect of the logic. Under different operating conditions, target state of charge of the battery needs to be controlled to achieve smoother mode switch and improve overall vehicle comfort.

Currently, mainstream driving modes of the hybrid electric vehicle mainly include pure electric, series, and direct drive (Power-Split). Different power drives may be selected based on different selection conditions, and modes may be switched appropriately in real-time. With the addition of the battery system, a vehicle control system needs to control target state of charge of the battery to meet usage requirements of a power battery under different operating conditions. Existing methods for controlling the target state of charge in hybrid vehicles are insufficient to fully address the power battery requirements under various operating conditions, fail to fully utilize available capacity of the battery, and are unfavorable for improving driving range of the vehicle.

### SUMMARY

The present application provides a control method and apparatus for a hybrid electric vehicle, a hybrid electric vehicle, and a medium. The method may comprehensively consider a current operating condition of a hybrid electric vehicle, vehicle data and environmental data under the operating condition to adjust optimal target state of charge. Consequently, discharging or charging of a power battery may be performed based on the optimal target state of charge to meet usage requirements of the power battery under the current operating condition. This enables dynamic and comprehensive control of the optimal target state of charge, so that an available battery capacity may be fully utilized, thereby increasing a driving range, and enhancing driving performance and user experience.

In a first aspect, the present disclosure provides a control method and apparatus for a hybrid electric vehicle, a hybrid electric vehicle, and a medium. The method includes: acquiring vehicle data and environmental data of the hybrid electric vehicle under a current operating condition; determining, based on the vehicle data and the environmental data, optimal target state of charge corresponding to the current operating condition; and controlling discharging or charging of a power battery of the hybrid electric vehicle according to the optimal target state of charge.

Through the above technical solution, the current operating condition of the hybrid electric vehicle, the vehicle data and the environmental data under the operating condition are comprehensively considered to adjust the optimal target state of charge. By considering various operating conditions and the vehicle data and environmental data corresponding thereto, the power battery may be discharged or charged according to the optimal target state of charge to meet the usage requirements of the power battery under the current operating condition. This enables dynamic and comprehensive control of the optimal target state of charge, so that an available battery capacity may be fully utilized, thereby increasing a driving range, and enhancing driving performance and the user experience.

According to the first aspect, in some possible implementations, the determining, based on the vehicle data and the environmental data, the optimal target state of charge corresponding to the current operating condition includes: identifying a vehicle speed, a battery temperature, an opening degree of accelerator pedal, a system mode, and a driving mode from the vehicle data, and identifying an ambient temperature and an atmospheric pressure from the environmental data; determining, based on the vehicle speed, the ambient temperature, and the battery temperature, base target state of charge, and determining, based on one or more of the vehicle speed, the opening degree of accelerator pedal, the atmospheric pressure, the system mode, and the driving mode, a correction value for the target state of charge; and correcting, based on the correction value, the base target state of charge to obtain the optimal target state of charge corresponding to the current operating condition.

Through the above technical solution, the correction value for the base target state of charge may be determined based on different operating conditions, and the vehicle data and environmental data under those conditions. The base target state of charge is then corrected using the correction value to obtain the optimal target state of charge corresponding to the current operating condition. By comprehensively considering various factors, impracticality under specific operating conditions is avoided, enabling dynamic adjustment of the target state of charge.

According to the first aspect, in some possible implementations, before the controlling discharging or charging of the power battery of the hybrid electric vehicle according to the optimal target state of charge, the method further includes: determining whether the hybrid electric vehicle satisfies a preset lowering condition for the target state of charge; controlling the hybrid electric vehicle to enter a lowering mode for the target state of charge, and identifying a vehicle speed and a battery temperature from the vehicle data and identifying an ambient temperature from the environmental data when the hybrid electric vehicle satisfies the preset lowering condition; and determining, based on one or more of the vehicle speed, the battery temperature, and the ambient temperature, a lowering value for the target state of charge, and correcting, based on the lowering value, the optimal target state of charge.

Through the above technical solution, when the hybrid electric vehicle satisfies the preset lowering condition for the target state of charge, the hybrid electric vehicle may be controlled to enter the lowering mode. This allows the target state of charge to be progressively lowered, enabling utilization of a wider range of the available capacity of the battery and thereby increasing the driving range.

According to the first aspect, in some possible implementations, the preset lowering conditions include the following conditions: a total mileage of the hybrid electric vehicle is less than a first preset mileage, a system mode is a first preset power mode, a driving mode is a first preset driving mode, and actual state of charge of the power battery is greater than first preset state of charge.

Through the above technical solution, when the preset lowering condition is satisfied, the hybrid electric vehicle may be controlled to enter the lowering mode for subsequent adjustment of the optimal target state of charge.

According to the first aspect, in some possible implementations, after the controlling the hybrid electric vehicle to enter the lowering mode for the target state of charge, the method further includes: determining whether the hybrid electric vehicle satisfies a preset lowering exit condition; and controlling the hybrid electric vehicle to exit the lowering mode for the target state of charge and terminating correction of the optimal target state of charge when the hybrid electric vehicle satisfies the preset lowering exit condition.

Through the above technical solution, when the hybrid electric vehicle satisfies the preset lowering exit condition for the target state of charge, the hybrid electric vehicle may be controlled to exit the lowering mode.

According to the first aspect, in some possible implementations, the preset lowering exit condition include any one of the following conditions: the system mode is a second preset power mode, the driving mode is a second preset driving mode, actual state of charge of the power battery is less than second preset state of charge, a battery temperature of the power battery is less than a preset temperature, the hybrid electric vehicle has traveled a second preset mileage in a battery reservation mode, and the vehicle speed exceeds a preset speed and is maintained for a preset duration.

Through the above technical solution, when the hybrid electric vehicle satisfies any one of the preset lowering exit conditions, the hybrid electric vehicle may exit the lowering mode.

According to the first aspect, in some possible implementations, before the controlling discharging or charging of the power battery of the hybrid electric vehicle according to the optimal target state of charge, the method further includes: detecting whether a current power mode of the hybrid electric vehicle is a battery reservation mode; acquiring a user-set value of the target state of charge when the current power mode is detected to be the battery reservation mode; and correcting, based on the user-set value of the target state of charge, the optimal target state of charge.

Through the above technical solution, when the hybrid electric vehicle is in the battery reservation mode, the optimal target state of charge may be corrected based on the user-set value of the target state of charge, thereby satisfying user requirements.

In a second aspect, the present application provides control apparatus for a hybrid electric vehicle, including: an acquisition module, configured to acquire vehicle data and environmental data of the hybrid electric vehicle under a current operating condition; a determining module, configured to determine, based on the vehicle data and the environmental data, optimal target state of charge corresponding to the current operating condition; and a control module, configured to control discharging or charging of a power battery of the hybrid electric vehicle according to the optimal target state of charge.

According to the second aspect, in some possible implementations, the determining module is configured to: identify a vehicle speed, a battery temperature, an opening degree of accelerator pedal, a system mode, and a driving mode from the vehicle data, and identifying an ambient temperature and an atmospheric pressure from the environmental data; determine, based on the vehicle speed, the ambient temperature, and the battery temperature, base target state of charge, and determine, based on one or more of the vehicle speed, the opening degree of accelerator pedal, the atmospheric pressure, the system mode, and the driving mode, a correction value for the target state of charge; and correct, based on the correction value, the base target state of charge to obtain the optimal target state of charge corresponding to the current operating condition.

According to the second aspect, in some possible implementations, the control apparatus for the hybrid electric vehicle further includes: a first judgment module, configured to determine whether the hybrid electric vehicle satisfies a preset lowering condition for the target state of charge before the controlling discharging or charging of the power battery of the hybrid electric vehicle according to the optimal target state of charge; control the hybrid electric vehicle to enter a lowering mode for the target state of charge, and identifying a vehicle speed and a battery temperature from the vehicle data and identifying an ambient temperature from the environmental data when the hybrid electric vehicle satisfies the preset lowering condition; and determine, based on one or more of the vehicle speed, the battery temperature, and the ambient temperature, a lowering value for the target state of charge, and correcting, based on the lowering value, the optimal target state of charge.

According to the second aspect, in some possible implementations, the preset lowering conditions include the following conditions: a total mileage of the hybrid electric vehicle is less than a first preset mileage, a system mode is a first preset power mode, a driving mode is a first preset driving mode, and actual state of charge of the power battery is greater than first preset state of charge.

According to the second aspect, in some possible implementations, the control apparatus for the hybrid electric vehicle further includes: a second judgment module, configured to determine whether the hybrid electric vehicle satisfies a preset lowering exit condition after the controlling the hybrid electric vehicle to enter the lowering mode for the target state of charge; and control the hybrid electric vehicle to exit the lowering mode for the target state of charge and terminating correction of the optimal target state of charge when the hybrid electric vehicle satisfies the preset lowering exit condition.

According to the second aspect, in some possible implementations, the preset lowering exit conditions include any one of the following conditions: the system mode is a second preset power mode, the driving mode is a second preset driving mode, actual state of charge of the power battery is less than second preset state of charge, a battery temperature of the power battery is less than a preset temperature, the hybrid electric vehicle has traveled a second preset mileage in a battery reservation mode, and the vehicle speed exceeds a preset speed and is maintained for a preset duration.

According to the second aspect, in some possible implementations, the control apparatus for the hybrid electric vehicle further includes: a detection module, configured to detect whether a current power mode of the hybrid electric vehicle is a battery reservation mode before the controlling discharging or charging of the power battery of the hybrid electric vehicle according to the optimal target state of charge; acquire a user-set value of the target state of charge when the current power mode is detected to be the battery reservation mode; and correct, based on the user-set value of the target state of charge, the optimal target state of charge.

In a third aspect, the present application provides a hybrid electric vehicle, including a memory, a processor, and a computer program stored in the memory and executable by the processor, where the processor is configured to implement the method in the above-mentioned first aspect or any one of the possible implementations of the first aspect when the program is executed.

In a fourth aspect, the present application provides a computer-readable storage medium storing computer program, where the computer program is executed to implement the method above-mentioned in the first aspect or any possible implementation method of the first aspect.

### BRIEF DESCRIPTION OF THE DRAWINGS

FIG. 1 is a flowchart of a control method for a hybrid electric vehicle according to embodiments of the present application.
FIG. 2 is a control logic diagram of a lowering mode according to embodiments of the present application.
FIG. 3 is a logic diagram of dynamic control of target state of charge according to embodiments of the present application.
FIG. 4 is a schematic structural diagram of a control device for a hybrid electric vehicle according to embodiments of the present application.

### Reference numerals:

100, control apparatus for a hybrid electric vehicle; 100, acquisition module; 200, determination module; 300, control module.

### DETAILED DESCRIPTION OF THE EMBODIMENTS

A clear and detailed description of technical solutions of the present application will be given below with reference to accompanying drawings. In the description of the embodiments of the present application, unless otherwise specified, the symbol "/" represents the meaning of "or", for example, A/B can represent A or B. The "and/or" in the text is merely a way to describe the relationship between associated objects, indicating that there may be three types of relationships. For example, "A and/or B" may mean A alone, both A and B, or B alone. Furthermore, in the description of the embodiments of the present application, "a plurality of" refers to two or more than two.

Hereinafter, the terms "first" and "second" are merely used for descriptive purposes and should not be construed as implying or suggesting relative importance or implicitly indicating the quantity of the indicated technical features. Therefore, when a feature is characterized as "first" or "second", it may be explicitly or implicitly understood to include one or more of such features.

Before description of a control method for a hybrid electric vehicle of the present application, it should be noted that, currently, mainstream driving modes of the hybrid electric vehicles mainly include pure electric, series and direct drive. Different power drives may be selected based on different selection conditions, and modes may be switched appropriately in real-time.

With addition of a battery system, a vehicle control system needs to control target state of charge of the battery. Conventional hybrid electric vehicle models are unable to adequately adjust the target state of charge according to various usage scenarios due to limited considerations. When the vehicle operates in a battery reservation mode, only a single target state of charge value is available, failing to achieve dynamic adjustment. Similarly, when the vehicle operates in a pure electric mode for an extended period, the target state of charge remains the same as in a hybrid mode. This fails to fully utilize the available capacity of the battery, and is unfavorable for improving pure electric driving range of the vehicle. Therefore, it is necessary to dynamically control optimal target state of charge of the hybrid electric vehicle and manage the discharge or charge of the power battery based on the optimal target state of charge.

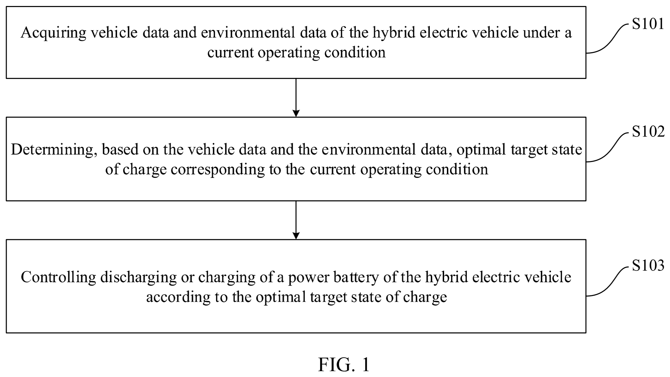

FIG. 1 is a schematic flowchart of a control method for a hybrid electric vehicle according to the embodiments of the present application.

Exemplarily, as shown in FIG. 1, the method includes the following steps.

Step S101: acquiring vehicle data and environmental data of the hybrid electric vehicle under a current operating condition.

The current operating condition refers to an operating condition of the hybrid electric vehicle in a current operating state and a current environmental state. The vehicle data includes a vehicle speed, a battery temperature, an opening degree of accelerator pedal, a system mode including a pure electric mode, a pure fuel mode, a hybrid mode, a battery reservation mode, and the like), and a driving mode (including a sport mode, an economy mode, a standard mode, and the like). The environmental data include an ambient temperature, an atmospheric pressure, and the like.

Step S102: determining, based on the vehicle data and the environmental data, optimal target state of charge corresponding to the current operating condition.

It should be understood that embodiments of the present application may determine the optimal target state of charge corresponding to the current operating condition based on the vehicle data and the environmental temperature under the current operating condition of the hybrid electric vehicle. By comprehensively considering various operating conditions and various factors, different optimal target states of charge correspond to different operating conditions, avoiding impracticality in specific scenarios, so that the available battery capacity of the battery may be fully utilized to increase a driving range. Consequently, the target state of charge can be dynamically adjusted according to the prevailing conditions, thereby fully leveraging the usability of the battery.

In the embodiments of the present application, the determining, based on the vehicle data and the environmental data, the optimal target state of charge corresponding to the current operating condition includes: identifying a vehicle speed, a battery temperature, an opening degree of accelerator pedal, a system mode, and a driving mode from the vehicle data, and identifying an ambient temperature and an atmospheric pressure from the environmental data; determining, based on the vehicle speed, the ambient temperature, and the battery temperature, base target state of charge, and determining, based on one or more of the vehicle speed, the opening degree of accelerator pedal, the atmospheric pressure, the system mode, and the driving mode, a correction value for the target state of charge; and correcting, based on the correction value, the base target state of charge to obtain the optimal target state of charge corresponding to the current operating condition.

It should be understood that the embodiments of the present application may determine the base target state of charge based on the vehicle speed, the ambient temperature, and the battery temperature. Then, the correction value for the target state of charge may be determined based on one or more of the vehicle speed, the opening degree of accelerator pedal, the atmospheric pressure, the system mode, and the driving mode. The base target state of charge is then corrected according to the correction value to obtain the optimal target state of charge corresponding to the current operating condition. By comprehensively considering various factors, dynamic adjustment of the optimal target state of charge for the hybrid electric vehicle is achieved based on the operating conditions, the vehicle data, and the environmental data, enabling intelligent regulation.

An acquisition method of the target state of charge provided by an embodiment of the present may include:
(1) Establishing, based on the vehicle speed and the battery temperature, target state of charge calibration table A, and establishing, based on the vehicle speed and the ambient temperature, target state of charge calibration table B; and selecting a larger value from the two tables as the base table for setting the target state of charge, to maintain a high target state of charge, so that requirements under different environmental conditions may be satisfied. That is, the base target state of charge may be determined based on the base table.
   In the embodiments of the present application, the target state of charge (SOC) is set based on the vehicle speed, the battery temperature, and the ambient temperature. When the battery temperature or the ambient temperature is low, a target value may be increased to avoid a power deficit. The purpose of considering the vehicle speed is to lower the target state of charge at low speeds, thereby allowing the engine to shut down as much as possible. For example, in low-temperature conditions, after the hybrid electric vehicle has been parked overnight, the ambient temperature and the battery temperature may be similar. However, after the driver operates the vehicle for a period, the battery temperature will rise. In this case, if only looking up the table based on the ambient temperature, the target state of charge may not change significantly. But if based on the battery temperature, the target SOC could drop considerably since the battery temperature increases substantially. When the hybrid electric vehicle is then parked and left stationary overnight again, the battery temperature decreases, but the target state of charge remains low, potentially failing to meet usage requirements in low temperatures. Therefore, the larger value is selected from the two table so that a higher target SOC may be maintained. This method avoids excessively low SOC of the battery caused by significant differences between the battery temperature and the ambient temperature, which may otherwise affect usability.
(2) Establishing, based on the vehicle speed and the opening degree of accelerator pedal, target state of charge calibration table C; determining, based on the vehicle speed and the opening degree of accelerator pedal, the correction value for the target state of charge; and correcting, based on the correction value, the base target state of charge. Higher vehicle speeds and higher opening degree of the accelerator pedal may increase the target state of charge, allowing better adjustment of the target state of charge based on the vehicle speed and the opening degree of accelerator pedal. This approach provides more electric power to the hybrid electric vehicle to ensure dynamic performance.
(3) Establishing, based on the atmospheric pressure, target state of charge calibration table D; determining, based on the atmospheric pressure, the correction value for the base target state of charge; and correcting, based on the correction value, the base target state of charge. Lower atmospheric pressure leads to reduction in engine power and output power. Therefore, by increasing the target state of charge, more driving power may be provided. This approach fully considers an impact of the atmospheric pressure on the target state of charge and improves the driving experience.
(4) Establishing, based on the system mode and the driving mode, target state of charge calibration table E; determining, based on the system mode and the driving mode, the correction value for the base target state of charge; and correcting, based on the correction value, the base target state of charge. Different modes correspond to different target states of charge. Varying target state of charge of the hybrid electric vehicle required under different modes is considered to satisfy power required in different modes, so that the driving experience is enhanced.

The correction value may be determined through calibration experiments, which will not specifically limited herein.

It should be noted that in practical application, the embodiments of the present application may flexibly combine (2)-(4) according to actual operating conditions to determine the correction value, and then the base target state of charge in is corrected(1) based on the correction value to obtain the optimal target state of charge, which will be illustrated through specific examples below, as detailed below.
1. When the vehicle is operating at low-altitudes and driving at a high speed with a high opening degree of accelerator pedal, the vehicle speed and the opening degree of the accelerator pedal are main factors affecting the target state of charge. Therefore, in this embodiment of the present application, the optimal target state of charge is acquired by using the above-mentioned (1) and (2), as detailed below:
   When the vehicle speed is high and the opening degree of accelerator pedal is high, it indicates that the hybrid electric vehicle has a high demand for power. In such cases, the engine may mostly operate at the most economical fuel consumption and optimal power output state, not only driving the vehicle smoothly but also generating more surplus energy for charging. Therefore, in this situation, the target state of charge may be increased. That is, the correction value is determined from the vehicle speed and the opening degree of accelerator pedal, and the base target state of charge in (1) is adjusted to obtain the optimal target state of charge, thereby ensuring the power performance of the hybrid electric vehicle.
2. When the vehicle is operating at high-altitudes and driving at a low speed with a low opening degree of the accelerator pedal, the atmospheric pressure is the main factor affecting the target state of charge. Therefore, in this embodiment of the present application, the optimal target state of charge is acquired by using the above-mentioned (1) and (3), as detailed below.

The embodiment of the present application may obtain the optimal target state of charge in the high-altitude area using the (1) and mentioned above(3), as detailed below.

In high-altitude areas with thin air, intake pressure of the engine decreases, leading to a reduction in overall engine performance. Power capacity and output power of the engine may be weakened. Accordingly, in high-altitude environments with low atmospheric pressure, the target state of charge may be increased to retain more electrical energy, thereby enhancing power output and improving the driving experience. Specifically, the correction value for the base target state of charge is determined based on the atmospheric pressure, and the base target state of charge in (1) is adjusted by this correction value to obtain the optimal target state of charge.

3. When the vehicle is operating at high-altitudes and driving at a high speed with a high opening degree of the accelerator pedal, the vehicle speed, the opening degree of accelerator pedal, and the atmospheric pressure are main factors affecting the target state of charge. Therefore, in this embodiment of the present application, the optimal target state of charge is acquired by using the above-mentioned (1), (2), and (3), as detailed below:

Based on the base target state of charge obtained in (1), the target state of charge needs to be increased at high-altitudes to retain more electrical energy and enhance power output. In this case, a correction value for the base target state of charge is determined based on atmospheric pressure. Simultaneously, under conditions of high vehicle speed and high opening degree of the accelerator pedal, due to the high-power demand of the hybrid electric vehicle, the target state of charge needs to be increased, and another correction value is determined based on the vehicle speed and the opening degree of the accelerator pedal. Finally, by comprehensively calculating these two correction values according to weighting of the atmospheric pressure, the vehicle speed, and the opening degree of the accelerator pedal on the target state of charge, a final correction value is then calculated. The base target state of charge is then adjusted using the final correction value to obtain the optimal target state of charge.

4. When the hybrid electric vehicle is operating in a special mode, such as snow, sand, or mud driving mode, in this embodiment of the present application, the optimal target state of charge is acquired by using the above-mentioned (1) and (4), as detailed below:
Due to varying power demands across different modes, in special modes like snow, sand, or mud, the vehicle requires higher power (e.g., for escaping from desert or muddy terrain). In such cases, a higher target state of charge can provide stronger power output. Therefore, the correction value for the base target state of charge is determined based on the system mode and the driving mode, and the base target state of charge in (1) may be adjusted accordingly using the correction value to obtain the optimal target state of charge.

The embodiment of the present application may further simultaneously consider (1), (2), (3), and (4) to obtain the optimal target state of charge. By integrating multiple condition, such as the vehicle speed, the battery temperature, the ambient temperature, the atmospheric pressure, the opening degree of the accelerator pedal, the system mode, and the driving mode into an overall evaluation, intelligent and dynamic regulation of the optimal target state of charge for the hybrid electric vehicle is achieved based on the operating conditions, the vehicle data, and the environmental data, realizing intelligent regulation.

Step S103: controlling discharging or charging of a power battery of the hybrid electric vehicle according to the optimal target state of charge.

It should be understood that the embodiment of the present application may control the charging or discharging of the power battery of the hybrid electric vehicle according to the optimal target state of charge, thereby achieving fully intelligent control of the power battery, improving the driving performance and the driving experience.

In the embodiments of the present application, before the controlling discharging or charging of the power battery of the hybrid electric vehicle according to the optimal target state of charge, the method further includes: determining whether the hybrid electric vehicle satisfies a preset lowering condition for the target state of charge; controlling the hybrid electric vehicle to enter a lowering mode for the target state of charge, and identifying a vehicle speed and a battery temperature from the vehicle data and identifying an ambient temperature from the environmental data when the hybrid electric vehicle satisfies the preset lowering condition; and determining, based on one or more of the vehicle speed, the battery temperature, and the ambient temperature, a lowering value for the target state of charge, and correcting, based on the lowering value, the optimal target state of charge.

It should be understood that, in the embodiment of the present application, when the hybrid electric vehicle meets the preset lowering conditions, the hybrid electric vehicle may be controlled to enter the lowering mode of the target state of charge. Based on one or more of the vehicle speed, the battery temperature, and the ambient temperature of the current operating condition, the lowering value for the target state of charge is determined. The lowering value is then used to correct the optimal target state of charge by continuously lowering the optimal target state of charge. This allows for utilization of a wider range of available capacity of the battery, thereby increasing the driving range of the hybrid electric vehicle.

The preset lowering condition includes the following conditions: a total mileage of the hybrid electric vehicle is less than a first preset mileage, a system mode is a first preset power mode, a driving mode is a first preset driving mode, and actual state of charge of the power battery is greater than first preset state of charge.

The first preset mileage may be set according to a specific situation of the hybrid electric vehicle, for example, the first preset mileage may be set to 150000 km. The first preset power mode may be the pure electric mode, the first preset driving mode may be a standard mode, and the first preset state of charge may be 94%.

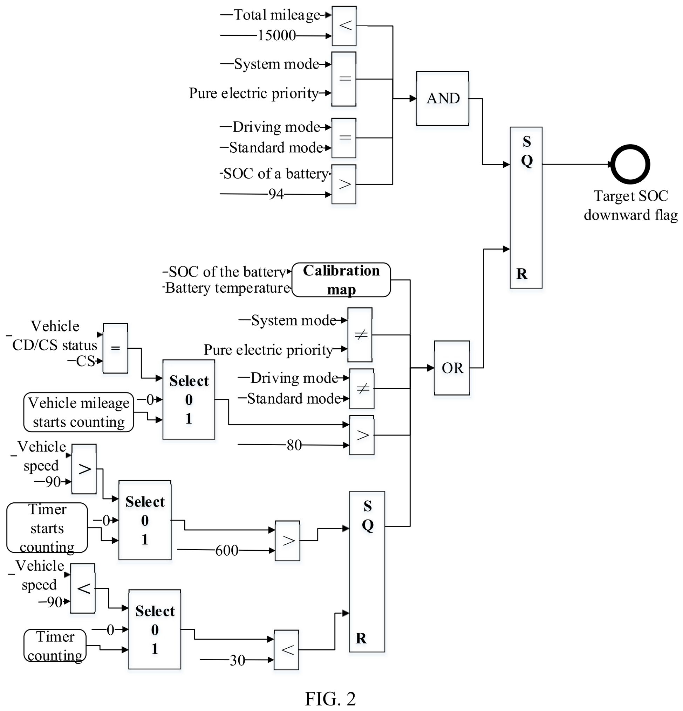

For example, a logic for activating the preset lowering mode may be explained with reference to FIG. 2. As shown in FIG. 2, activation of the lowering mode is related to several conditions.

The activation conditions are as follows: the total vehicle mileage is less than 150000 km; the hybrid system mode is set to pure electric priority (a default mode of the vehicle); the driving mode is set to the standard mode (a default mode of the vehicle); and actual state of charge of the battery is greater than 94 %. The loweringfunction is activated when the four conditions are satisfied simultaneously.

In the embodiments of the present application, after the controlling the hybrid electric vehicle to enter the lowering mode for the target state of charge, the method further includes: determining whether the hybrid electric vehicle satisfies a preset lowering exit condition; and controlling the hybrid electric vehicle to exit the lowering mode for the target state of charge and terminating correction of the optimal target state of charge when the hybrid electric vehicle satisfies the preset lowering exit condition.

It should be understood that, in the embodiments of the present application, when the hybrid electric vehicle satisfies the preset lowering exit condition, the hybrid electric vehicle is controlled to exit the lowering mode for the target state of charge, and the correction of the optimal target state of charge is terminated.

The preset lowering exit condition may include any one of the following conditions: the system mode is a second preset power mode, the driving mode is a second preset driving mode, actual state of charge of the power battery is less than second preset state of charge, a battery temperature of the power battery is less than a preset temperature, the hybrid electric vehicle has traveled a second preset mileage in a battery reservation mode, and the vehicle speed exceeds a preset speed and is maintained for a preset duration.

The preset temperature, the second preset mileage, the preset vehicle speed and the preset duration may be set according to specific situations. The second preset driving mode is a driving mode other than the first driving mode, such as the pure fuel mode, the hybrid mode, and the battery reservation mode, and the like. The second preset state of charge may be a state of charge applicable under low-temperature conditions.

For example, exit conditions for the lowering mode are related to multiple factors, including: the hybrid system mode is no longer pure electric priority; the driving mode is no longer the standard model; the exit condition is met by looking up a table based on the state of charge of the battery and temperature (according to a principle for exiting the lowering mode for the target state of charge under low-temperature conditions); the vehicle has traveled 80 km after switching from Charge Depleting (CD)/Charge Sustaining (CS) mode to Charge Sustaining (CS) mode; and the vehicle speed remains greater than 90 kph for more than 600 seconds (when the vehicle speed drops below 90 kph, the vehicle speed may resume after 30 seconds). The loweringfunctionwill exit when any one of the above five conditions is satisfied.

It should be noted that, a lower limit for the state of charge of the battery is set based on principles of battery protection and considerations for overall vehicle drivability. This avoids complete battery discharge leading to battery lockout and poor drivability in the hybrid mode under low state of charge. Upon detecting that the user has driven solely in the pure electric mode since the last full charge, the target state of charge is lowered to make full use of available capacity of the battery, thereby increasing the pure electric driving range.

In the embodiments of the present application, before the controlling discharging or charging of the power battery of the hybrid electric vehicle according to the optimal target state of charge, the method further includes: detecting whether a current power mode of the hybrid electric vehicle is a battery reservation mode; acquiring a user-set value of the target state of charge when the current power mode is detected to be the battery reservation mode; and correcting, based on the user-set value of the target state of charge, the optimal target state of charge.

It is understandable that in the embodiments of the present application, when the current power mode of the hybrid vehicle is in the battery reservation mode, the user may set the value of the target state of charge by themselves. The optimal target state of charge may be corrected to meet usage requirements of the user based on this user-set value.

The battery reservation mode may be divided into two types including a forced battery reservation mode and an intelligent battery reservation mode. The influencing factors are the user-set value of the target state of charge on the instrument panel and the vehicle speed. The optimal target state of charge is output by selecting a larger value between the base target state of charge and the user-set value.

In addition, according to the embodiments of the present application, the user may also set a desired value of the target state of charge (i.e., a maximum target state of charge value) based on battery characteristics to avoid fully charging the battery, thereby potentially extending its lifespan.

In view of above, the present application considers multiple operating conditions when setting the target state of charge to avoid impracticality in specific conditions. The battery reservation mode is added to enable manual adjustment of setting of the target state of charge. The lowering mode is provided during pure electric driving to increase the pure electric driving range. Specifically, it takes into account conditions such as the vehicle speed, the ambient temperature, the battery temperature, the driving mode, and the atmospheric pressure. In the battery reservation mode, the target state of charge is dynamically adjustable through the instrument panel. Meanwhile, usage requirements of the driver are identified. When the hybrid electric vehicle continuously operates in the pure electric mode, the target state of charge is lowered, utilizing a wider range of the available capacity of the battery to increase the pure electric driving range. This method achieves dynamic control of the target state of charge for the hybrid electric vehicle, ultimately enhancing the overall user experience.

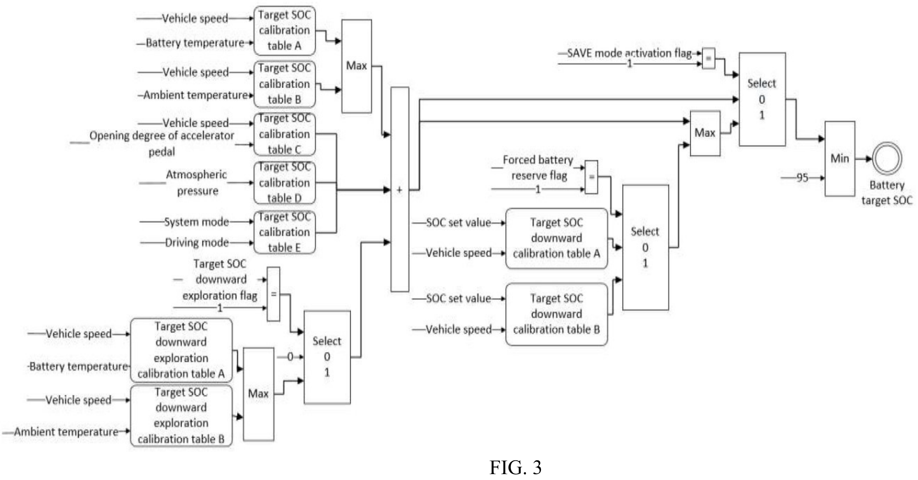

The following will elaborate on a dynamic control logic for the target state of charge of the present application with reference to FIG. 3. The details are as follows:
(1) selecting a larger one of two calibration tables set based on the vehicle speed and the ambient temperature, and the battery temperature respectively as a base table for setting the target state of charge (shown as the target SOC in figures);
(2) correcting the base table based on the vehicle speed and the opening degree of accelerator pedal to higher vehicle speeds and higher opening degree of accelerator pedals, leading to an increase in the target state of charge;
(3) correcting the base table based on the atmospheric pressure to weaker atmospheric pressure, leading to a higher target state of charge;
(4) correcting the base table based on the system mode and the driving mode, leading to different values of the target state of charge corresponding to different modes;
(5) when a lowering function for the target state of charge is activated, reducing the target state of charge to varying degrees based on the vehicle speed, the ambient temperature, and the battery temperature, to increase the pure electric driving range;
(6) in the battery reservation mode, setting two modes including a forced battery reservation mode and an intelligent battery reservation mode, where the influencing factors for the modes are a set value of the state of charge on the instrument panel and the vehicle speed, and selecting a larger value between the set value of state of charge and the base target state of charge for the hybrid electric vehicle as a target output value;
(7) setting a maximum target state of charge based on battery characteristics to prevent the battery from being fully charged, thereby effectively enhancing the lifespan of the power battery.

According to the control method for the hybrid electric vehicle according to the embodiments of the present application, the optimal target state of charge may be adjusted based on the current operating condition of the hybrid electric vehicle, the vehicle data and environmental data under the operating condition. By considering multiple operating conditions and the corresponding vehicle data and environmental data, a power battery may be discharged or charged based on the optimal target state of charge to meet usage requirements of a power battery under the current operating condition. This enables dynamic and comprehensive control of the optimal target state of charge, so that an available battery capacity may be fully utilized, thereby increasing a driving range, and enhancing driving performance and user experience.

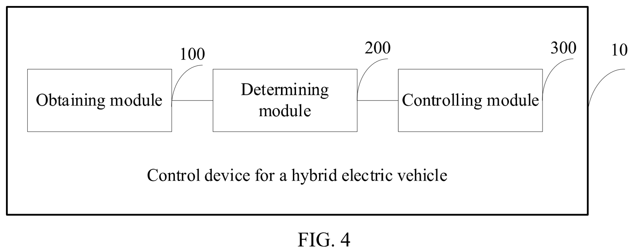

FIG. 4 is a schematic structural diagram of a control apparatus for a hybrid electric vehicle according to the embodiments of the present application.

Exemplarily, as shown in FIG. 4, the device 10 may include: an acquisition module 100, a determining module 200, and a control module 300.

The acquisition module 100 is configured to acquire vehicle data and environmental data of the hybrid electric vehicle under a current operating condition;

The determining module 200 is configured to determine, based on the vehicle data and the environmental data, optimal target state of charge corresponding to the current operating condition.

The control module 300 is configured to control discharging or charging of a power battery of the hybrid electric vehicle according to the optimal target state of charge.

In the embodiments of the present application, the determining module 200 is configured to identify a vehicle speed, a battery temperature, an opening degree of accelerator pedal, a system mode, and a driving mode from the vehicle data, and identifying an ambient temperature and an atmospheric pressure from the environmental data; determine, based on the vehicle speed, the ambient temperature, and the battery temperature, base target state of charge, and determine, based on one or more of the vehicle speed, the opening degree of accelerator pedal, the atmospheric pressure, the system mode, and the driving mode, a correction value for the target state of charge; and correct, based on the correction value, the base target state of charge to obtain the optimal target state of charge corresponding to the current operating condition.

In the embodiments of the present application, the device 10 of the present application further includes a first judgment module.

The first judgment module is configured to determine whether the hybrid electric vehicle satisfies a preset lowering condition for the target state of charge before the controlling discharging or charging of the power battery of the hybrid electric vehicle according to the optimal target state of charge; control the hybrid electric vehicle to enter a lowering mode for the target state of charge, and identifying a vehicle speed and a battery temperature from the vehicle data and identifying an ambient temperature from the environmental data when the hybrid electric vehicle satisfies the preset lowering condition; and determine, based on one or more of the vehicle speed, the battery temperature, and the ambient temperature, a lowering value for the target state of charge, and correcting, based on the lowering value, the optimal target state of charge.

In the embodiments of the present application, the preset lowering conditions include the following conditions: a total mileage of the hybrid electric vehicle is less than a first preset mileage, a system mode is a first preset power mode, a driving mode is a first preset driving mode, and actual state of charge of the power battery is greater than first preset state of charge.

In the embodiments of the present application, the device 10 of the present application further includes a second judgment module.

The second judgment module is configured to determine whether the hybrid electric vehicle satisfies a preset lowering exit condition after the controlling the hybrid electric vehicle to enter the lowering mode for the target state of charge; and control the hybrid electric vehicle to exit the lowering mode for the target state of charge and terminating correction of the optimal target state of charge when the hybrid electric vehicle satisfies the preset lowering exit condition.

In the embodiments of the present application, the preset lowering exit conditions include any one of the following conditions: the system mode is a second preset power mode, the driving mode is a second preset driving mode, actual state of charge of the power battery is less than second preset state of charge, a battery temperature of the power battery is less than a preset temperature, the hybrid electric vehicle has traveled a second preset mileage in a battery reservation mode, and the vehicle speed exceeds a preset speed and is maintained for a preset duration.

In the embodiments of the present application, the device 10 of the present application further includes a detection module.

The detection module is configured to detect whether a current power mode of the hybrid electric vehicle is a battery reservation mode before the controlling discharging or charging of the power battery of the hybrid electric vehicle according to the optimal target state of charge; acquire a user-set value of the target state of charge when the current power mode is detected to be the battery reservation mode; and correct, based on the user-set value of the target state of charge, the optimal target state of charge.

According to the control apparatus for the hybrid electric vehicle provided by the embodiments of the present application, the optimal target state of charge may be adjusted based on the current operating condition of the hybrid electric vehicle, the vehicle data and environmental data under the operating condition. By considering multiple operating conditions and the corresponding vehicle data and environmental data, a power battery may be discharged or charged based on the optimal target state of charge to meet usage requirements of a power battery under the current operating condition. This enables dynamic and comprehensive control of the optimal target state of charge, so that an available battery capacity may be fully utilized, thereby increasing a driving range, and enhancing driving performance and user experience.

Furthermore, the embodiments of the present application further protect a hybrid electric vehicle including a memory and a processor. Executable program codes are stored in the memory. The processor is configured to call and execute the executable program codes to implement a control method for a hybrid electric vehicle provided by the embodiments of the present application.

The embodiment of the present application further provides a computer-readable storage medium storing computer program codes. When the computer program codes are executed on a computer, the computer is configured to executes the above-mentioned related method steps to achieve a control method for a hybrid electric vehicle provided by the above-mentioned embodiments.

The apparatus, the computer-readable storage medium, or the chip provided by the embodiment is configured to execute the above-mentioned corresponding method. Therefore, the beneficial effects achieved by them may refer to the beneficial effects in the corresponding method provided above. No further detailed explanation is provided here.

Through the description of the above embodiments, those skilled in the art may understand that, for the convenience and clarity of description, only the division of the above-mentioned functional modules is used as an example. In practical applications, the above functions may be allocated to different functional modules as needed, meaning the internal structure of the device may be divided into different functional modules to accomplish all or part of the functions described above.

In the embodiments provided in the present application, it is understandable that the disclosed device and method may be implemented in other methods. For example, the device embodiments described above are merely illustrative. For example, the division of modules or units is only a logical functional division. In practical implementation, alternative division methods may be adopted. For example, the plurality of units or components may be combined or integrated into another device, or some features may be omitted or not executed. Furthermore, the displayed or discussed mutual couplings, direct couplings, or communication connections may be implemented through certain interfaces, devices, or units in the form of indirect couplings or communication connections, and may be electrical, mechanical, or of other forms.

The above contents are merely specific embodiments of the present disclosure, rather than limiting the protection scope of the present invention. Any changes or substitutions that can be easily conceived by those skilled in the art within the scope of the technology disclosed in this application should be covered by the scope of protection of the present application. Therefore, the scope of protection of the present application should be determined by the protection scope of the claims.

## Claims

1. A control method for a hybrid electric vehicle, comprising:
acquiring vehicle data and environmental data of the hybrid electric vehicle under a current operating condition;
determining, based on the vehicle data and the environmental data, optimal target state of charge corresponding to the current operating condition; and
controlling discharging or charging of a power battery of the hybrid electric vehicle according to the optimal target state of charge.

2. The control method for the hybrid electric vehicle according to claim 1, wherein the determining, based on the vehicle data and the environmental data, optimal target state of charge corresponding to the current operating condition comprises:
identifying a vehicle speed, a battery temperature, an opening degree of accelerator pedal, a system mode, and a driving mode from the vehicle data, and identifying an ambient temperature and an atmospheric pressure from the environmental data;
determining, based on the vehicle speed, the ambient temperature, and the battery temperature, base target state of charge, and determining, based on one or more of the vehicle speed, the opening degree of accelerator pedal, the atmospheric pressure, the system mode, and the driving mode, a correction value for the target state of charge; and
correcting, based on the correction value, the base target state of charge to obtain the optimal target state of charge corresponding to the current operating condition.

3. The control method for the hybrid electric vehicle according to any one of claims 1 to 2, before the controlling discharging or charging of the power battery of the hybrid electric vehicle according to the optimal target state of charge, further comprising:
determining whether the hybrid electric vehicle satisfies a preset lowering condition for the target state of charge;
controlling the hybrid electric vehicle to enter a lowering mode for the target state of charge, and identifying a vehicle speed and a battery temperature from the vehicle data and identifying an ambient temperature from the environmental data when the hybrid electric vehicle satisfies the preset lowering condition; and
determining, based on one or more of the vehicle speed, the battery temperature, and the ambient temperature, a lowering value for the target state of charge, and correcting, based on the lowering value, the optimal target state of charge.

4. The control method for the hybrid electric vehicle according to any one of claims 1 to 3, wherein the preset lowering condition comprises one or more of the following conditions: a total mileage of the hybrid electric vehicle is less than a first preset mileage, a system mode is a first preset power mode, a driving mode is a first preset driving mode, and actual state of charge of the power battery is greater than first preset state of charge.

5. The control method for the hybrid electric vehicle according to any one of claims 1 to 4, after the controlling the hybrid electric vehicle to enter a lowering mode for the target state of charge, further comprising:
determining whether the hybrid electric vehicle satisfies a preset lowering exit condition; and
controlling the hybrid electric vehicle to exit the lowering mode for the target state of charge and terminating correction of the optimal target state of charge when the hybrid electric vehicle satisfies the preset lowering exit condition.

6. The control method for the hybrid electric vehicle according to any one of claims 1 to 5, wherein the preset lowering exit condition comprises any one of the following conditions: the system mode is a second preset power mode, the driving mode is a second preset driving mode, the actual state of charge of the power battery is less than second preset state of charge, the battery temperature of the power battery is less than a preset temperature, the hybrid electric vehicle has traveled a second preset mileage in a battery reservation mode, and the vehicle speed exceeds a preset speed and is maintained for a preset duration.

7. The control method for the hybrid electric vehicle according to any one of claims 1 to 6, before the controlling discharging or charging of a power battery of the hybrid electric vehicle according to the optimal target state of charge, further comprising:
detecting whether a current power mode of the hybrid electric vehicle is a battery reservation mode;
acquiring a user-set value of the target state of charge when the current power mode is detected to be the battery reservation mode; and
correcting, based on the user-set value of the target state of charge, the optimal target state of charge.

8. A control apparatus for a hybrid electric vehicle, comprising:
an acquisition module, configured to acquire vehicle data and environmental data of the hybrid electric vehicle under a current operating condition;
a determination module, configured to determine, based on the vehicle data and the environmental data, an optimal target state of charge corresponding to the current operating condition; and
a control module, configured to control discharging or charging of a power battery of the hybrid electric vehicle according to the optimal target state of charge.

9. A hybrid electric vehicle, comprising: a memory, a processor, and a computer program stored in the memory and executable by the processor, wherein the processor is configured to implement a control method for a hybrid electric vehicle according to any one of claims 1 to 7 when the program is executed.

10. A computer-readable storage medium, storing a computer program wherein the computer program is executed to implement the control method for the hybrid electric vehicle according to any one of claims 1 to 7.
